# EUROPEAN PATENT APPLICATION

(11) **EP 0 989 726 A1**
(43) Date of publication of application: **29.03.2000**
(21) Application number: 98440212.3
(22) Date of filing: 22.09.1998
(51) Int. Cl.: H04M 19/08

(54) **Telecommunications device with visual display**

(71) Applicant: ALCATEL, 75088 Paris (FR)
(72) Inventor: Domain, Francis, 67100 Strasbourg (FR); Licht, Robert C., Manassas, Virginia 20112 (US)
(74) Representative: Rausch, Gabriele, Dr.

(57) **Abstract**

A telecommunications device for connection to an analog telecommunications network is disclosed in which a small quiescent current is used to operate a visual display in the presence of a message.

## Description

This invention relates to a telecommunications device for connection to an analog telecommunications network as set forth in the preamble of the main claim. Telecommunications devices are known in the art which have a visual display in the form of a light-emitting diode. The most widely known terminals with a visual display are answering machines, which signal a received message with a flashing light-emitting diode. Such an answering machine has a mains connection or an internal battery for making available the operating current required to operate the flashing light-emitting diode. Control is effected via a microcontroller. Compared with this prior art, the telecommunications device according to the invention, with the characterizing features of the main claim, has the advantage of being independent of a mains or battery supply. According to the invention, the telecommunications device comprises a circuit capable of operating a visual display, this circuit being powered exclusively by a small quiescent current of the telecommunications device.

By the measures recited in the subclaims, further developments of and improvements in the telecommunications device set forth in the main claim are possible. In a preferred embodiment of the invention, the quiescent current energizes a charging/discharge circuit in parallel with a network termination. The visual display is advantageously implemented in the form of a light-emitting diode. In another preferred embodiment, an oscillator circuit is formed which is capable of powering a light-emitting diode by a small supply current.

The circuit according to the invention can be easily incorporated into different analog telecommunications devices, such as telephone sets, answering machines, fax machines, etc. One embodiment of the invention will now be explained in greater detail with reference to the accompanying drawings, in which:
- Fig. 1: shows the general structure of a telephone set; and
- Fig. 2: shows the circuit according to the invention.

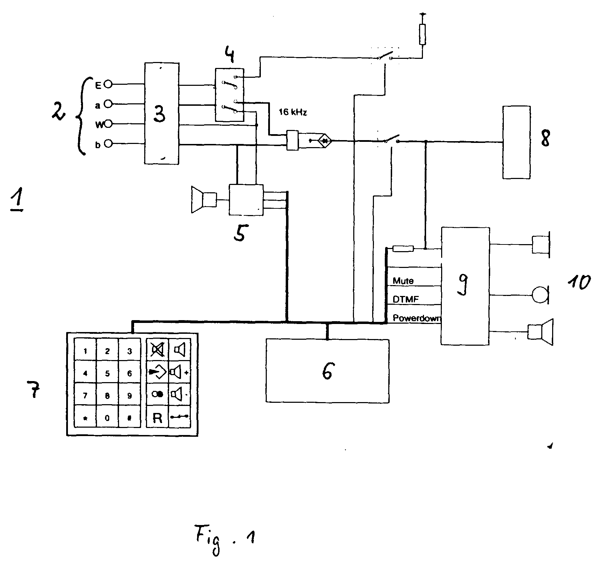

Referring to Fig. 1, there is shown a telephone set 1 which is connected to a telecommunications network via inputs and outputs 2. The inputs are connected to a surge protector 3. The signal input a is connected to a switch 4, whose associated output is coupled through a filter to a network termination 8. The second signal input b is also connected to the network termination through the filter and, in addition, to a signal generator 5, which, in turn, is connected to a keypad 7, a processor 6, and a speech circuit 9. The speech circuit 9 is connected to the network termination 8. Coupled to the output end of the speech circuit 9 are a handset, a loudspeaker, and hands-free facilities 10. The input line wire W ("Wecker", i.e., ringer) is connected directly to the signal generator 5. When the handset is on-hook, the switch 4 is open and no current flows in the telephone set to a first degree of approximation. When the handset is lifted off-hook, the switch 4 is operated, thereby closing the circuit between the telephone set and the exchange.

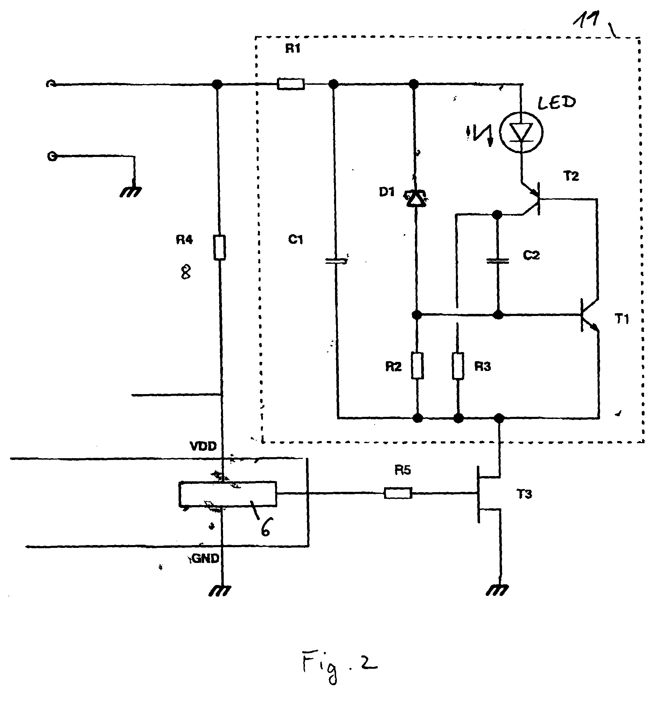

Fig. 2 shows the circuit according to the invention in a communications terminal. The network termination 8 meets the specifications of the various telephone companies in different countries. Such a network termination permits the flow of an, albeit small, current in the terminal. Frequently, the network termination is chosen so that a small quiescent current of a few µA is present for powering a microcontroller 6 in the standby state. The circuit 11 according to the invention for operating a visual display is connected in parallel with the termination 8. Through a resistor R1, a first capacitor C1 is charged with a small current. When a threshold voltage across the capacitor C1 is reached, a zener diode D1 connected in parallel with this capacitor conducts, so that the voltage is applied to the base of a transistor T1 and, as the latter turns on, to the base of a transistor T2. A current of a few mA flows for a shod time through the base-emitter junction of transistor T1, the base-emitter junction of transistor T2, and the light-emitting diode LED. The time is determined by the value of the capacitor C1, which discharges, with the capacitor C2 being charged. At the same time, the voltage across capacitor C1 increases and the zener diode D1 blocks the flow of current. During the discharge time of a few ms, the light-emitting diode LED flashes. The current through the capacitor C2 decreases and the two transistors T1 and T2 turn off again. During this OFF time, the capacitor C1 is recharged through the resistor R1. During the charging time of capacitor C1, capacitor C2 is discharged through resistor R3. The circuit is controlled by the microcontroller 6, which, as soon as a message is to be indicated, activates the circuit 11 through resistor R5 and transistor T3. To that end, the mircrocontroller, which is also powered by a small quiescent current causes the transistor T3 to turn on. Only in that case is the circuit 11 connected to ground, and the charging/discharge current can flow. The microcontroller checks whether a message is present; it is also possible to display an error message. The display can be used as a status indicator in various terminals. Use of such a circuit is also possible at the network-operator end.

## Claims

1. A telecommunications device for connection to an analog telecommunications network, having electric ports which are connected to the telecommunications network, and containing a network termination which permits a small quiescent current (I₀), characterized in that a circuit for operating a visual display is provided which, powered by the quiescent current (I₀), activates the visual display when a message is present in the telecommunications device.

2. A telecommunications device as claimed in claim 1, characterized in that the quiescent current (I₀) energizes a charging/discharge circuit in parallel with the network termination.

3. A telecommunications device as claimed in claim 1 or 2, characterized in that the visual display is a light-emitting diode.

4. A telecommunications device as claimed in any one of the preceding claims, characterized in that a first capacitor (C1) connected in parallel with a zener diode (D1) and in parallel with a light-emitting diode (LED) is charged through a first resistor (R1), that a light-emitting diode is connected through a first transistor (T2) and a second capacitor (C2) to a second transistor (T1), and that, when a microprocessor (6) activates the circuit, the discharge current between the collector of the first transistor (T2) and the base of the second transistor (T1) is discharged through the second capacitor (C2) and a resistor (R3) in parallel with the second capacitor (C2).

5. A telecommunications device as claimed in any one of the preceding claims, characterized in that the quiescent current is in the microampere range.

6. A telecommunications device as claimed in any one of the preceding claims, characterized in that it is a subscriber terminal, such as a telephone, an answering machine, or a fax machine.

7. A telecommunications device as claimed in any one of the preceding claims, characterized in that it is a network analyzer for use at the network-operator end.
